# EUROPEAN PATENT SPECIFICATION

(11) **EP 2 743 687 B1**
(45) Date of publication and mention of the grant of the patent: **18.03.2020**
(21) Application number: 13197200.2
(22) Date of filing: 13.12.2013
(51) Int. Cl.: G01N 23/087, G01V 5/00, G01N 23/20, G01N 23/203

(54) **Method and device for screening objects for the presence of foreign substances**
Verfahren und Vorrichtung zum Screening von Objekten auf das Vorhandensein von Fremdkörpern
Procédé et dispositif de criblage d'objets pour la présence de substances étrangères

(30) Priority: 14.12.2012 NL 2009984
(43) Date of publication of application: 18.06.2014
(73) Proprietor: DT-Solutions B.V., 7543 BK Enschede (NL)
(72) Inventor: Bethke, Johannes, 7468 CZ Enter (NL)
(74) Representative: Mink-Lindenburg, Charlotte Hildegard

(56) References cited:
- WO-A1-02/090954
- US-A- 5 280 513
- US-A- 5 428 657
- US-A1- 2012 140 891
- ANNE-SOPHIE LALLEMAN ET AL: "A dual X-ray backscatter system for detecting explosives: Image and discrimination of a suspicious content", NUCLEAR SCIENCE SYMPOSIUM AND MEDICAL IMAGING CONFERENCE (NSS/MIC), 2011 IEEE, IEEE, 23 October 2011 (2011-10-23), pages 299-304, XP032117513, DOI: 10.1109/NSSMIC.2011.6154503 ISBN: 978-1-4673-0118-3

## Description

The present invention relates in general to a method and device for screening objects, such as electronic equipment, for the presence of foreign substances. The present invention has for its purpose to provide such a method and device that are suitable for many different fields of application. The foreign substances can be substances of interest, unexpected, suspicious or even unwanted substances depending on the application.

One important field is formed by the security inspection of luggage at travel points, such as airports. Classic examples of foreign substances that are to be identified in luggage are contraband and dangerous materials, such as explosives. One important class of foreign substances in luggage is formed by liquid explosives. The challenge is large as on air ports time is an essential factor, putting severe constraints on the method and the device with respect to a short turnaround and a low false rate.

A special challenge at check-in points on airports is the clearance of electronic equipment such as notebooks, mobile phones, in particular smart phones, and photo camera's. Currently electronic equipment is obligatory to be taken out of the hand luggage and to be imaged separately by the usual X-ray imaging devices at airport check-in points. Additionally sometimes a notebook is opened by airport personnel such that the screen is turned up. This is done in order to see if the computer is appearing as a real electronic device and not as a fake box containing dangerous materials like explosives or contraband like drugs. Sometimes it appeared in practice that hollow spaces had been filled with forbidden material, e.g. after removal of the battery slot or a hard drive or by manipulation of the screen. This cannot be easily detected by personnel or the usual X-ray imaging methods.

The present invention relates specifically to a method for screening an object, such as electronic equipment, for the presence of foreign substances, comprising the steps of directing a collimated X-ray beam onto the object and detecting and measuring an energy spectrum resulting from X-ray scattering of energy from the object. The present invention also relates to a device having means to perform the steps of the method according to the present invention.

Such a method and device are known from the patent application EP2677304 of the same applicant. Detection of explosives using X-ray analysis is known from US 2012/0140891 and material discrimination in general is known from US 5,428,657.

The present invention has for its object to provide automatic safe check of objects, such as electronic equipment.

The method according to the present invention is characterised by means for determining the total number of counts or count rate corresponding to the spectrum measured, comprising the Compton scattering signal and the Bremsstrahlungsspectrum, and further comprising the Rayleigh scattering signal, and means for establishing the presence or absence of foreign substances based on evaluation of the number of counts determined. The device according to the present invention is characterised by means to perform the characterizing steps of the method according to the present invention.

The method and device according to the invention is highly sensitive and allows for a low false rate, since it uses significant, sometimes huge measurement signals that are easy to detect. Another benefit is formed by an increase in throughput per unit time as the time per clearance of an object can be as short as 1-5 seconds.

Surprisingly it has been found that there is no need for correction of the detected and measured signal as the back ground signal itself contains useful information.

In a fast and reliable embodiment the presence of foreign substances is established by comparing the number of counts to a predetermined threshold value. The total number of counts found for the specific object screened can be compared with the standard value thereof relating to the same object not tampered with. A database may be provided stored with data relating to specific objects, such as different types of notebooks, mobile phones, cameras and the like.

In a practical embodiment an energy spectrum resulting from back scattering of energy from the object at a fixed angle lying between 120 and 170 degrees with respect to the collimated X-ray beam directed onto the object is detected and measured.

Preferably the X-ray beam comprises polychromatic X-rays.

More preferably the X-ray beam comprises X-rays having an energy that is sufficiently high to penetrate (luggage) barriers surrounding the object, preferably with high tensions of 100 kV and higher.

The invention will be further described with reference to the attached drawings, wherein
Figure 1 shows a preferred embodiment of a device according to the invention; and
Figure 2 shows an energy spectrum recorded as back scattering of X-ray energy from a notebook wherein a foreign substance is concealed.

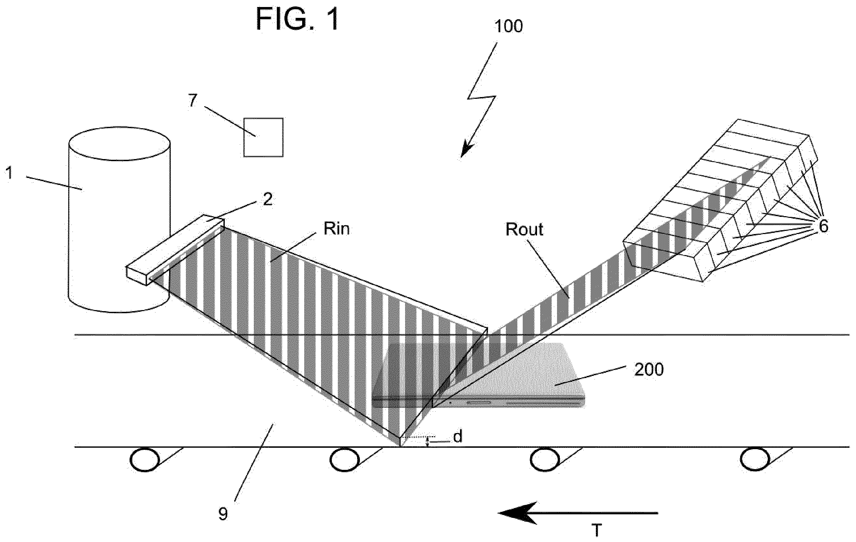

In the preferred embodiment shown in figure 1 the device 100 according to the invention is arranged for inspection of electronic equipment. The object under inspection is a notebook or laptop 200. The notebook 200 is transported on a conveyor belt 9 in the direction T.

Device 100 comprises an X-ray source 1 for radiating X-rays having an energy that is sufficiently high to scan the notebook. Applicant believes that 50 to 100 keV or more will be sufficient. The preferred embodiment comprises a polychromatic X-ray source, more specifically a tungsten X-ray tube. Alternatively monochromatic X-ray radiation may be used, other X-ray tube anode materials may be chosen as well as other values for high tension of the tube of 100 kV to 160 kV or even higher. It is noted the method and device according to the invention are not restricted to the use of X-ray tubes. As an alternative a synchrotron or a cyclotron is considered to be a suitable source for X- radiation as well.

The beam emerging from the X-ray source 1 is collimated by a first collimator 2 on the primary side of the optical path. Preferably a slit shaped collimator is used in order to create a fan shaped beam to irradiate a complete column shaped or line shaped volume of the notebook. By moving the notebook with respect to the X-ray source subsequent column shaped volumes of the notebook are scanned that cover the complete volume. The size of the irradiated volume can be adjusted by the first collimators. Fineness of details, sharpness of the image and depth-sharpness can be chosen by shaping the beam. With this setup it is possible to choose volumes such that only one scan is sufficient for covering a whole notebook in a short time. This again saves significant time and is suitable for examination of hand baggage as well as for check-in baggage.

The outgoing radiation has a number of components and consists of transmitted radiation and X-ray diffracted signals and X-ray scattered signals emerging in an angular range, the latter forming the useful signal Rₒᵤₜ. On the secondary side of the optical path one or more second collimators may be positioned, each in front of an X-ray detector 6 in order to provide for a sufficient angular resolution during measurements.

The detectors 6 are arranged to detect the scattering of X-ray energy from the electronic equipment 200. Preferably each detector is arranged to count X-ray. Suitable detectors include a high-purity Ge detector or a CdTe / CdZnTe detector. In another aspect of the invention a multi segment Ge detector or multiple single Cd (Zn)Te detector may be used in order to gain measurement time. In the most advanced situation one or multiple pixellated detectors with many pixels, all pixels revealing an energy spectrum or at least energy regions of interest, will improve on measuring time such that a high throughput of electronic equipments is guaranteed.

In the preferred embodiment shown the detectors are arranged to detect Rₒᵤₜ the back scattering of X-ray energy from the electronic equipment 200. The detectors 6 are preferably arranged to measure X-ray energy within an angle range of 120-170 degrees. Preferably an array of detectors referred to as a detector bank is used, comprising a set of about 20 X-ray detectors forming a line. One or more additional detector arrays may be placed in transport direction T of the electronic equipment 200.

When using the fan beam geometry of the device shown in figure 1 a laptop can be divided in for instance 30 columns. When screening of each column takes 0,1 second, the entire lap top can be screened in 3 seconds.

A processor 7 is arranged to receive the measured data from the detectors 6.

The processor 7 is arranged to screen the electronic equipment 200 for the presence of foreign substances using the method according to the invention. The processor 7 is provided with first means for determining the number of counts corresponding to at least the integral inelastic part of the spectrum measured by the detectors 6. The first means may also be arranged to determine the total counts corresponding to the spectrum measured by the detectors 6.

The processor 7 is further provided with second means for establishing the presence or absence of foreign substances based on evaluation of the number of counts. The second means are preferably arranged to establish the presence of foreign substances when the number of counts exceeds a predetermined threshold value. A databank with suitable threshold values relating to several types of objects, in particular several types of electronic equipment, such as notebooks, smart phones, digital cameras, may be provided.

The device according to the invention may further be provided with alarm means for giving an alarm when the presence of foreign substances is established in the electronic equipment.

Once such an alarm situation occurs, also a second stage of investigation, such as described in the abovementioned patent application EP2677304, can be combined with the present method. This second stage classifies the materials then in further detail by means of a reference data table. The applicant has investigated already numerous different computer models.

In all cases also a zero-calibration is performed on different classes of equipment under investigation.

In this combined setting a second line of detectors is added under smaller scattering angles, the combined detector system now recording the X-ray tube line Rayleigh and Compton signals angle dependent.

In the following all steps of the method according to the invention are discussed.

### Step 1: Directing a collimated X-rav beam onto the object

In a first step energy-dispersive X-ray spectroscopy (EDS or EDX) techniques are used to analyse the object. Various EDS or EDX devices known in the art will be suitable. A collimated X-ray beam is directed onto the object by an X-ray source for radiating X-rays. When the object lies behind a barrier, e.g. is present in luggage, suitable X-rays have an energy that is sufficiently high to penetrate luggage barriers.

### Step 2: Detecting and measuring the scattering of X-rav energy from the object

In step 2 in general X-ray scattering spectra are detected. Preferably X-ray backscattered radiation is detected. X-ray scattering signals are known to be elastic and inelastic, referred to as Rayleigh and Compton scattering, respectively. The strength of the signals is dependent on the primary X-ray spectrum impinging on the object to be investigated.

### Step 3: Determining the number of counts corresponding to at least the integral inelastic part of the spectrum measured in step b)

According to the invention an energy resolved spectrum is detected by the X-ray detector(s) and recorded. The energy spectrum contains Rayleigh (elastic) and Compton (inelastic) X-radiation of the characteristic (in this example: tungsten) radiation of the tube and the bremsstrahlungsspectrum. Either the number of counts or the count rate is determined. According to the invention, the count rate or number of counts of the complete spectrum is used as the relevant signal. Advantageously it is not necessary to separate this spectrum from its peaks. Normally the scattered bremsstrahlungsspectrum is subtracted as background from peak signals and thus removed. Here it appears that precisely this part of the spectrum contributes to the useful signal. The Compton peak and the bremsstrahlungsspectrum constitute the most important part of the used signal, which is the integral inelastic part. The elastic peak (tube anode Rayleigh peak) does not need to be removed as it is mostly very small under high angles. Optionally measurements are confined to a region of interest of the above spectra, e.g. a region of interest (ROI) offering optimal signals.

For enhanced accuracy one may for instance take the ROI from a low Energy value to e.g. 58 keV just below the W alpha and beta lines, which are the elastic scattering component of the W tube k alpha and beta radiation. In an other setup it is also possible to use said ROI plus one above the W k alpha and beta line to a high energy value e.g. 100 keV. The count of the k alpha and beta line is normally very low compared to the count in the lower ROI and can be included in the complete spectrum. Summarizing, according to the invention the integral counts in ROI's may be used, whereas alternatively the integral counts under the total spectrum can be taken as the relevant signal. All of the described choices are valid.

### Step 4: Establishing the presence or absence of foreign substances based on evaluation of the number of counts determined in step c).

The invention is based on the insight that every photon of the polychromatic spectrum can undergo Compton scattering. As response a new polychromatic spectrum arises containing peaks above a scattered bremsstrahlungsspectrum. The intensity of this spectrum is characteristic for the object under investigation. In case of normal electronic equipment, i.e. electronic equipment that is not tampered with, the count rate will be 500 ± 100 counts per second in a typical setting of device 100. The intensity of this spectrum is globally enhanced by substances comprising elements having a low atomic number Z (Z < 20) as is typical for drugs and explosives (liquid or solid). A typical order of magnitude for the enhancement of the count rate is a factor of 2 to 4.

Step d) comprises establishing the presence of foreign substances when the number of counts exceeds a predetermined threshold value. These corresponding threshold data have been pre-determined by numerous experiments and tests resulting in a database.

Applicant finds it is possible to determine the presence of (classes of) substances and in particular to find dangerous materials and contraband based on the above.

### EXAMPLE

Regular electronic equipment, such as a laptop exhibits 500 ± 100 counts per second in a typical setting of device 1. When an amount of sugar is hidden in the laptop, e.g. exchanged for the battery, this will lead to up to 2000 counts per second. Sugar is representative for drugs and includes elements having a low atomic number.

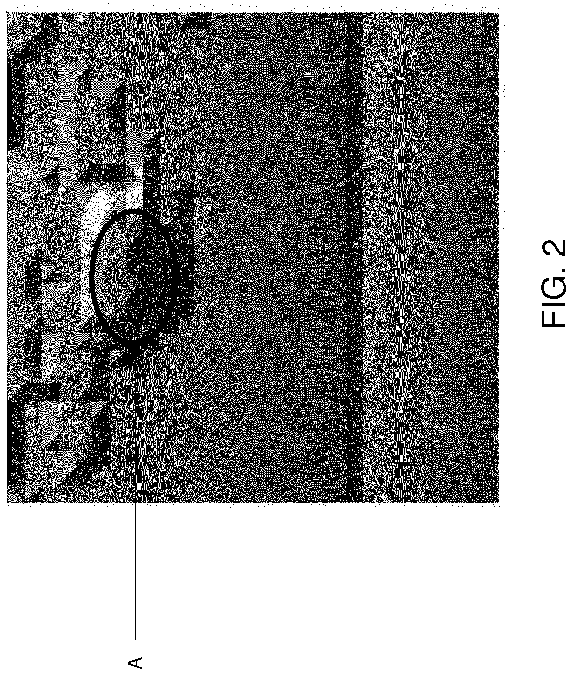

Figure 2 shows an impression of a recording of an energy spectrum of a laptop wherein the battery is exchanged with an amount of sugar. In figure 2 lighter colours represent higher counts. The location A of the sugar can be clearly distinguished.

Metals, such as present in the ordinary battery, are not contributing to an enhancement of intensity, because under high take-off angles their Compton signal approaches zero.

Instead, drugs and explosives can be discriminated with very high sensitivity. This means that the relevant false rate is very low.

It is noted that the special class of amorphous substances, such as liquid explosives, can easily be identified as a foreign substance. Thus the method according to the present invention delivers a sound solution to the problem of detecting liquid explosives concealed in luggage.

Generally, the method according to the invention does not reveal the chemical, stoichiometric formula of the substance. It well rules out materials which do not typically belong to an object. When in use at a travel point, if an alarm is given, the object is removed from the travel chain and it is appropriate to put it into a bomb room for special treatment.

Although the method and device according to the present invention have been elucidated by referring to the described and shown preferred embodiment relating to luggage inspection, many other applications are possible. For instance mail can be screened for drugs or explosives. In general the method and the device according to the invention allow for establishing the presence of foreign substances in an object. Although the examples described relate to screening objects for foreign substances comprising elements having an atomic number Z < 20, the invention may also be of use in applications involving elements having an atomic number Z > 20. All examination or screening can be performed equally well when the object is placed behind barriers or in containers. For each application the specific values for tension and/or energy of the X-rays need to be suited to the barrier strength.

It is therefore noted that the invention is not limited to the embodiment described and shown herein, but generally extends to any embodiment which falls within the scope of the appended claims as seen in the light of the foregoing description and drawings.

## Claims

1. Method for screening an object, such as electronic equipment, for the presence of foreign substances, comprising the steps of:
a) Directing a collimated X-ray beam onto the object;
b) Detecting and measuring an energy spectrum resulting from X-ray scattering of energy from the object;
**characterised in that** the method further comprises the following steps:
c) determining the total number of counts or count rate corresponding to the energy spectrum measured in step b), comprising the Compton scattering signal and the Bremsstrahlungsspectrum; and further comprising the Rayleigh scattering signal
d) Establishing the presence of foreign substances by comparing the number of counts or count rate determined in step c) to a predetermined threshold value.

2. Method according to claim 1, whereby step b) comprises detecting and measuring an energy spectrum resulting from back scattering of energy from the object at a fixed angle lying between 120 and 170 degrees with respect to the collimated X-ray beam directed onto the object.

3. Method according to one or more of the preceding claims, whereby in step a) the X-ray beam comprises polychromatic X-rays.

4. Method according to one or more of the preceding claims, whereby in step a) the X-ray beam comprises X-rays having an energy that is sufficiently high to penetrate barriers surrounding the object, preferably with high tensions of 100 kV and higher.

5. Device for screening an object, such as electronic equipment, for the presence of foreign substances, comprising:
a) Means for directing a collimated X-ray beam onto the object;
b) Means for detecting and measuring an energy spectrum resulting from X-ray scattering of energy from the object;
**characterised in that** the device further comprises:
c) Means for determining the total number of counts or count rate corresponding to the energy spectrum measured by the means b), comprising the Compton scattering signal and the Bremsstrahlungsspectrum; and further comprising the Rayleigh scattering signal;
d) Means for establishing the presence of foreign substances by comparing the number of counts or count rate determined in step c) to a predetermined threshold value
e) and means for giving an alarm when the threshold value is exceeded.

6. Device according to claim 5, wherein the means b) are arranged to detect and measure an energy spectrum resulting from back scattering of energy from the object at a fixed angle lying between 120 and 170 degrees with respect to the collimated X-ray beam directed onto the object.

7. Device according to one or more of the preceding claims 5, 6, wherein the means a) comprise an X-ray source for radiating polychromatic X-rays.

8. Device according to one or more of the preceding claims 5-7, wherein the means a) comprise an X-ray source for radiating X-rays having an energy that is sufficiently high to penetrate barriers surrounding the object, preferably with high tensions of 100 kV and higher.

## Patentansprüche

1. Verfahren zum Durchsuchen eines Objekts, wie ein elektronisches Gerät, auf das Vorhandensein von Fremdstoffen, umfassend die folgenden Schritte:
a) Richten eines kollimierten Röntgenstrahls auf das Objekt;
b) Erfassen und Messen eines Energiespektrums, das sich aus der Röntgenstreuung von Energie aus dem Objekt ergibt;
**dadurch gekennzeichnet, dass** das Verfahren ferner die folgenden Schritte umfasst:
c) Bestimmen der Gesamtzahl der Zählungen oder Zählraten entsprechend dem in Schritt b) gemessenen Energiespektrum, umfassend das Compton-Streusignal und das Bremsstrahlungsspektrum; und ferner umfassend das Rayleigh-Streusignal.
d) Feststellung des Vorhandenseins von Fremdstoffen auf der Grundlage der Auswertung der in Schritt c) bestimmten Anzahl von Zählungen oder Zählraten in Bezug auf einen vorgegebenen Schwellenwert.

2. Verfahren nach Anspruch 1, wobei Schritt b) das Erfassen und Messen eines Energiespektrums umfasst, das sich aus der Rückstreuung von Energie aus dem Objekt in einem festen Winkel zwischen 120 und 170 Grad in Bezug auf den auf das Objekt gerichteten kollimierten Röntgenstrahl ergibt.

3. Verfahren nach einem oder mehreren der vorstehenden Ansprüche, wobei in Schritt a) der Röntgenstrahl polychromatische Röntgenstrahlen umfasst.

4. Verfahren nach einem oder mehreren der vorstehenden Ansprüche, wobei in Schritt a) der Röntgenstrahl Röntgenstrahlen mit einer Energie umfasst, die ausreichend hoch ist, um Barrieren um das Objekt herum zu durchdringen, vorzugsweise mit hohen Spannungen von 100 kV und höher.

5. Vorrichtung zum Durchsuchen eines Objekts, wie ein elektronisches Gerät, auf das Vorhandensein von Fremdstoffen, umfassend:
a) Mittel zum Richten eines kollimierten Röntgenstrahls auf das Objekt;
b) Mittel zum Erfassen und Messen eines Energiespektrums, das sich aus der Röntgenstreuung von Energie von dem Objekt ergibt;
**dadurch gekennzeichnet, dass** die Vorrichtung ferner umfasst:
c) Mittel zum Bestimmen der Gesamtzahl der Zählungen oder Zählraten entsprechend dem durch die Mittel b) gemessenen Energiespektrum, umfassend das Compton-Streusignal und das Bremsstrahlungsspektrum; und ferner umfassend das Rayleigh-Streusignal.
d) Mittel zur Feststellung des Vorhandenseins von Fremdstoffen auf der Grundlage der Auswertung der in Schritt c) bestimmten Anzahl von Zählungen oder Zählraten in Bezug auf einen vorgegebenen Schwellenwert
e) und Mittel zum Auslösen eines Alarms, wenn der Schwellenwert überschritten wird.

6. Vorrichtung nach Anspruch 5, wobei die Mittel b) angeordnet sind, um ein Energiespektrum zu erfassen und zu messen, das sich aus der Rückstreuung von Energie aus dem Objekt in einem festen Winkel ergibt, der zwischen 120 und 170 Grad in Bezug auf den auf das Objekt gerichteten kollimierten Röntgenstrahl liegt.

7. Vorrichtung nach einem oder mehreren der vorstehenden Ansprüche 5, 6, wobei die Mittel a) eine Röntgenquelle zum Abstrahlen polychromatischer Röntgenstrahlen umfassen.

8. Vorrichtung nach einem oder mehreren der vorhergehenden Ansprüche 5-7, wobei die Mittel a) eine Röntgenquelle zum Abstrahlen von Röntgenstrahlen mit einer Energie umfassen, die ausreichend hoch ist, um Barrieren um das Objekt herum zu durchdringen, vorzugsweise mit hohen Spannungen von 100 kV und höher.

## Revendications

1. Procédé d'inspection d'un objet tel qu' un équipement électronique à la recherche de la présence de substances étrangères, comprenant les étapes consistant à :
a) Diriger un faisceau de rayons X collimaté sur l'objet ;
b) Détecter et mesurer un spectre d'énergie résultant de la diffusion de rayons X de l'énergie de l'objet ;
**caractérisé en ce que** le procédé comprend en outre les étapes consistant à :
c) déterminer le nombre total de coups ou taux de comptage correspondant au spectre d'énergie mesuré à l'étape b), comprenant le signal de diffusion de Compton et le spectre de rayonnement de freinage ; et comprenant en outre le signal de diffusion de Rayleigh
d) Établir la présence de substances étrangères en comparant le nombre de coups ou le taux de comptage déterminé à l'étape c) à une valeur seuil prédéterminée.

2. Procédé selon la revendication 1, dans lequel l'étape b) comprend la détection et la mesure d'un spectre d'énergie résultant d'une rétrodiffusion d'énergie provenant de l'objet selon un angle fixe situé entre 120 et 170 degrés par rapport au faisceau de rayons X collimaté dirigé sur l'objet.

3. Procédé selon l'une ou plusieurs des revendications précédentes, dans lequel, à l'étape a), le faisceau de rayons X comprend des rayons X polychromatiques.

4. Procédé selon l'une ou plusieurs des revendications précédentes, dans lequel, à l'étape a), le faisceau de rayons X comprend des rayons X ayant une énergie suffisamment élevée pour pénétrer des barrières entourant l'objet, de préférence avec des tensions élevées de 100 kV et plus.

5. Dispositif d'inspection d'un objet tel qu' un équipement électronique à la recherche de présence de substances étrangères, comprenant :
a) des moyens pour diriger un faisceau de rayons X collimaté sur l'objet ;
b) de moyens pour détecter et mesurer un spectre d'énergie résultant de la diffusion de rayons X de l'énergie de l'objet ;
**caractérisé en ce que** le dispositif comprend en outre :
c) des moyens pour déterminer le nombre total de coups ou le taux de comptage correspondant au spectre d'énergie mesuré par les moyens b), comprenant le signal de diffusion de Compton et le spectre de rayonnement de freinage ; et comprenant en outre le signal de diffusion de Rayleigh ;
d) des moyens pour établir la présence de substances étrangères en comparant le nombre de coups ou le taux de comptage déterminé à l'étape c) à une valeur seuil prédéterminée
e) et des moyens pour déclencher une alarme en cas de dépassement de la valeur seuil.

6. Dispositif selon la revendication 5, dans lequel les moyens b) sont conçus pour détecter et mesurer un spectre d'énergie résultant d'une rétrodiffusion d'énergie provenant de l'objet selon un angle fixe situé entre 120 et 170 degrés par rapport au faisceau de rayons X collimaté dirigé sur l'objet.

7. Dispositif selon l'une ou plusieurs des revendications précédentes 5, 6, dans lequel les moyens a) comprennent une source de rayons X pour rayonner des rayons X polychromatiques.

8. Dispositif selon l'une ou plusieurs des revendications précédentes 5-7, dans lequel les moyens a) comprennent une source de rayons X pour rayonner des rayons X ayant une énergie suffisamment élevée pour pénétrer des barrières entourant l'objet, de préférence avec des tensions élevées de 100 kV et plus.
